# EUROPÄISCHE PATENTSCHRIFT

(11) **EP 4 270 551 B1**
(45) Veröffentlichungstag und Bekanntmachung des Hinweises auf die Patenterteilung: **04.12.2024**
(21) Anmeldenummer: 22170565.0
(22) Anmeldetag: 28.04.2022
(51) Int. Cl.: H01M 8/02, F16L 41/14, F16L 41/03

(54) **ANSCHLUSSVORRICHTUNG FÜR EINEN HOCHDRUCK-WASSERSTOFFRESERVOIR, HOCHDRUCK-WASSERSTOFFSPEICHER BRENNSTOFFZELLENSYSTEM UND HERSTELLUNGSVERFAHREN FÜR EINE ANSCHLUSSVORRICHTUNG FÜR EINEN HOCHDRUCK-WASSERSTOFFRESERVOIR**
CONNECTION DEVICE FOR A HIGH-PRESSURE HYDROGEN RESERVOIR, HIGH PRESSURE HYDROGEN STORAGE SYSTEM AND METHOD FOR MANUFACTURING A CONNECTION DEVICE FOR A HIGH-PRESSURE HYDROGEN RESERVOIR
DISPOSITIF DE RACCORDEMENT POUR UN RÉSERVOIR D'HYDROGÈNE HAUTE PRESSION, SYSTÈME DE PILE À COMBUSTIBLE D'ACCUMULATEUR D'HYDROGÈNE HAUTE PRESSION ET PROCÉDÉ DE FABRICATION D'UN DISPOSITIF DE RACCORDEMENT POUR UN RÉSERVOIR D'HYDROGÈNE HAUTE PRESSION

(43) Veröffentlichungstag der Anmeldung: 01.11.2023
(73) Patentinhaber: Robert Bosch GmbH, 70442 Stuttgart (DE)
(72) Erfinder: Bernadac, Eric, 69800 St. Priest (FR); Pedron, Jerome, 38540 Heyrieux (FR)

(56) Entgegenhaltungen:
- WO-A1-2011/062631
- WO-A1-2016/014261
- GB-A- 672 078

## Beschreibung

### Technisches Gebiet

Die vorliegende Erfindung betrifft ein Hochdruck-Wasserstoffspeicher mit einer Anschlussvorrichtung für einen Hochdruck-Wasserstoffreservoir sowie ein Brennstoffzellensystem. Die vorliegende Erfindung betrifft ferner ein Herstellungsverfahren für ein Anschlussvorrichtung für einen Hochdruck-Wasserstoffreservoir.

### Stand der Technik

Brennstoffzellen sind in der Lage mittels einer Redoxreaktion an einer Anode und Kathode aus kontinuierlich zugeführtem Brennstoff und einem Oxidationsmittel elektrische Energie zu generieren. Hierbei kann beispielsweise in einem Anodenpfad Wasserstoff zugeführt werden und parallel dazu in einem Kathodenpfad Luftsauerstoff. In einem Brennstoffzellenstapel wird der Wasserstoff durch den zugeführten Luftsauerstoff oxidiert, wobei die elektrische Energie gewonnen werden kann.

Die Druckschrift DE 10 2017 212 485 A1 beschreibt eine Vorrichtung zur Speicherung von verdichteten Fluiden für ein Fahrzeug, insbesondere zur Speicherung von Wasserstoff für ein Brennstoffzellenfahrzeug.

Aus der GB 672 078 A ist eine Anschlussvorrichtung bekannt, die für einen Hochdruck Wasserstoffreservoir geeignet ist, mit: einem Grundkörper aus Aluminium oder einer Aluminium-Legierung mit einem Strömungskanal und mindestens einer radial zu dem Strömungskanal verlaufenden Anschlussöffnung; und mindestens einem Anschlusselement aus Stahl, wobei das mindestens eine Anschlusselement in der Anschlussöffnung des Grundkörpers angeordnet ist.

Die WO 2011/062631 A1 offenbart eine Anschlussvorrichtung, die für einen Hochdruck Wasserstoffreservoir geeignet ist, mit: einem Grundkorper aus Aluminium oder einer Aluminium-Legierung mit einem Strömungskanal und mindestens einer radial zu dem Strömungskanal verlaufenden Anschlussöffnung; und mindestens einem Anschlusselement aus Stahl, wobei das mindestens eine Anschlusselement in der Anschlussöffnung des Grundkörpers angeordnet ist.

Aus der WO 2016/014261 A1 eine Anschlussvorrichtung bekannt, die für einen Hochdruck Wasserstoffreservoir geeignet ist, mit einem Grundkorper aus Aluminium oder einer Aluminium-Legierung mit einem Strömungskanal und mindestens einer radial zu dem Strömungskanal verlaufenden Anschlussöffnung; und mindestens einem Anschlusselement aus Stahl, wobei das mindestens eine Anschlusselement in der Anschlussöffnung des Grundkörpers angeordnet ist.

### Offenbarung der Erfindung

Die vorliegende Erfindung schafft eine Anschlussvorrichtung für einen Hochdruck-Wasserstoffreservoir, ein Hochdruck-Wasserstoffspeicher, ein Brennstoffzellensystem sowie ein Herstellungsverfahren für ein Anschlussvorrichtung für einen Hochdruck-Wasserstoffreservoir mit den Merkmalen der unabhängigen Patentansprüche. Weitere vorteilhafte Ausführungsformen sind Gegenstand der abhängigen Patentansprüche.

### Demgemäß ist vorgesehen:

Ein Hochdruck-Wasserstoffspeicher mit einer Anschlussvorrichtung für einen Hochdruck-Wasserstoffreservoir, mit einem Grundkörper und mindestens einem Anschlusselement. Der Grundkörper ist aus Aluminium oder einer Aluminium-Legierung oder einem anderen Leichtmetall hergestellt. Das Anschlusselement ist aus Stahl, insbesondere Edelstahl hergestellt. Der Grundkörper weist eine radial zu dem Strömungskanal verlaufende Anschlussöffnung auf. Das mindestens eine Anschlusselement ist hierbei in der Anschlussöffnung des Grundkörpers angeordnet.

### Ferner ist vorgesehen:

Ein Hochdruck-Wasserstoffspeicher mit einer erfindungsgemäßen Anschlussvorrichtung und mindesten einem Hochdruck-Wasserstoffreservoir. Jedes Hochdruck-Wasserstoffreservoir ist hierbei an einem Anschlusselement lösbar mit der Anschlussvorrichtung verbunden ist.

### Weiterhin ist vorgesehen:

Ein Brennstoffzellensystem mit einem erfindungsgemäßen Hochdruck-Wasserstoffspeicher und einer Brennstoffzellenvorrichtung. Die Brennstoffzellenvorrichtung ist hierbei mit dem Hochdruck-Wasserstoffspeicher verbunden.

### Schließlich ist vorgesehen:

Ein Herstellungsverfahren für ein Anschlussvorrichtung für einen Hochdruck-Wasserstoffreservoir. Das Verfahren umfasst einen Schritt zum Bereitstellen eines Grundkörpers. Der Grundkörper ist aus Aluminium, einer Aluminium-Legierung oder einem anderen Leichtmetall hergestellt. Insbesondere weist der Grundkörper einen Strömungskanal und mindestens eine radial zu dem Strömungskanal verlaufende Anschlussöffnung auf. Weiterhin umfasst das Verfahren einen Schritt zum Einbringen von mindestens einem Anschlusselement in die mindestens Anschlussöffnung des Grundkörpers. Das Anschlusselement ist hierbei aus Stahl, insbesondere Edelstahl oder einem anderen hochfesten Material hergestellt.

### Vorteile der Erfindung

Der vorliegenden Erfindung liegt die Erkenntnis zugrunde, dass Brennstoffzellensysteme ihren Brennstoff, d. h. Wasserstoff, von einem Tanksystem beziehen, welches den Wasserstoff unter hohem Druck von bis zu 700 bar speichern kann. Dieses Tanksystem kann insbesondere mehrere einzelne Reservoirs umfassen. Hierbei ist eine Verbindung zwischen den einzelnen Reservoirs und dem Brennstoffzellensystem erforderlich. Gemäß den geltenden Vorschriften muss diese Verbindung auch nach mehrfachen Lösen und erneuten Verbinden noch eine ausreichende Dichtigkeit und Druckfestigkeit aufweisen.

Für derartige Anforderungen ist daher ein Verbindungselement aus einem hochfesten Material erforderlich, welches auch nach mehrfachen Lösen und erneuten Verbinden keinen Verschleiß aufweist, der die Dichtigkeit negativ beeinflussen könnte. Solche Materialien weisen in der Regel jedoch ein hohes spezifisches Gewicht auf und sind darüber hinaus auch relativ schwer zu bearbeiten.

Es ist daher eine Idee der vorliegenden Erfindung, dieser Erkenntnis Rechnung zu tragen und eine Anschlussvorrichtung für einen Hochdruck-Wasserstoffspeicher zu schaffen, welche einerseits einfach herzustellen ist und dabei auch ein möglichst geringes Gewicht aufweist, andererseits jedoch auch den Anforderungen für eine ausreichende Dichtigkeit nach mehrfachen Lösen und erneuten Verbinden entspricht.

Hierzu ist es erfindungsgemäß vorgesehen, eine solche Anschlussvorrichtung aus einem Grundkörper und zusätzlichen Anschlusselementen herzustellen. Dabei kann der Grundkörper aus einem Leichtmaterial, wie beispielsweise Aluminium oder einer Aluminium-Legierung, hergestellt werden. Dies kann beispielsweise in Form eines Gussprozesses erfolgen, sodass dieser Grundkörper als Gussteil in einfacher Weise bereitgestellt werden kann. In bzw. an diesem Grundkörper können daraufhin die Anschlusselemente aus einem hochfesten Material, wie beispielsweise Stahl, insbesondere Edelstahl, angebracht werden. Da diese Verbindung zwischen dem Grundkörper und dem Anschlusselement in der Regel nur einmalig während des Herstellungsprozesses erfolgt, sind die Anforderungen an eine solche Verbindung geringer, als die Anforderungen für eine Verbindung zu externen Komponenten, welche mehrfach gelöst werden soll.

Da das Anschlusselement selbst aus einem hochfesten Material wie Edelstahl realisiert wird, können an dieses Anschlusselement weitere Komponenten wie Zuleitungen, Ventile o. ä. angeschlossen werden, wobei auch nach mehrfachen Lösen und erneuten Verbinden eine ausreichende Stabilität für eine druckfeste und gasdichte Verbindung gewährleistet werden kann.

Dadurch, dass bei der erfindungsgemäßen Anschlussvorrichtung lediglich die relativ kleinen Anschlusselemente aus dem hochfesten Material wie Edelstahl bestehen und der weitaus größere Grundkörper aus einem Leichtmaterial wie Aluminium realisiert werden kann, ist das Gesamtgewicht der Anschlussvorrichtung deutlich geringer, als bei einer vergleichbaren Anschlussvorrichtung, welche vollständig aus einem hochfesten Material hergestellt ist. Darüber hinaus lässt sich ein Leichtmaterial wie Aluminium wesentlich einfacher bearbeiten als beispielsweise Edelstahl. Daher kann ein solcher Grundkörper auch wesentlich einfacher gefertigt werden.

Es versteht sich hierbei, dass sowohl für den Grundkörper als auch die Anschlusselemente der erfindungsgemäßen Anschlussvorrichtung jeweils geeignete Materialien zu wählen sind, welche den Anforderungen bezüglich Druckfestigkeit und insbesondere auch Beständigkeit gegenüber den durchströmenden Gasen, hier Wasserstoff, genügen.

Gemäß einer Ausführungsform umfasst der Grundkörper ein Aluminium-Gussteil. Derartige Gussteile sind gerade in höheren Stückzahlen sehr einfach und mit hoher Präzision herzustellen. Daher ist es möglich, die erfindungsgemäße Anschlussvorrichtung kostengünstig in hoher Qualität zu realisieren.

Gemäß einer Ausführungsform weist die mindestens eine Anschlussöffnung ein Gewinde, insbesondere Innengewinde, auf. Hierbei ist das mindestens eine Anschlusselement in die Anschlussöffnung eingeschraubt. Entsprechend weißt das Anschlusselement ein korrespondierendes Außengewinde auf. Somit kann das Anschlusselement in einfacher Weise in den Grundkörper hineingeschraubt werden. Dies ermöglicht eine einfache, schnelle und kostengünstige Herstellung.

Gemäß einer Ausführungsform weist das mindestens eine Anschlusselement einen Dichtabschnitt auf. Dieser Dichtabschnitt liegt im eingeschraubten Zustand des Anschlusselements an einer Außenseite des Anschlusselements auf. Auf diese Weise kann durch diesen Dichtabschnitt die Dichtigkeit der Verbindung zwischen Anschlusselement und Grundkörper zusätzlich erhöht werden.

Gemäß einer Ausführungsform weist das Gewinde in der Anschlussöffnung des Grundkörpers einen konischen Verlauf auf. Insbesondere ist ein Durchmesser des Gewindes im Bereich der Außenseits des Anschlusselements größer, als ein Durchmesser des Gewindes im Bereich des Strömungskanals. Zusätzlich oder alternativ kann auch das Gewinde des Anschlusselements, welches in die Anschlussöffnung hineingeschraubt wird, einen korrespondierenden konischen Verlauf aufweisen.

Gemäß einer Ausführungsform ist das mindestens eine Anschlusselement an einem von dem Grundkörper wegweisenden Abschnitt dazu ausgelegt ist, mit einem Hochdruck-Wasserstoffreservoir verbunden zu werden. Hierzu kann die Form des Anschlusselementes entsprechend ausgestaltet sein, um mit korrespondierenden Anschlusskomponenten des Wasserstoffreservoirs verbunden zu werden. Beispielweise kann hierzu einem Anschlusselement ein entsprechendes Gewinde vorgesehen sein, sodass das Anschlusselement mit den korrespondierenden Komponenten des Wasserstoffreservoirs verschraubt werden kann. Da das Anschlusselement hierbei aus einem hochfesten Material wie beispielsweise Edelstahl realisiert ist, kann eine solche Schraubverbindung auch nach mehrfachem Lösen und erneuten Verschrauben die erforderliche Dichtigkeit gewährleisten.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der Erfindung werden nachfolgend anhand der Figuren erläutert. Dabei zeigen:
- Fig. 1:: eine schematische Darstellung eines Brennstoffzellensystems mit einer Anschlussvorrichtung gemäß einer Ausführungsform;
- Fig. 2:: eine schematische Darstellung eines Querschnitts durch eine Anschlussvorrichtung gemäß einer Ausführungsform; und
- Fig. 3:: ein Ablaufdiagramm, wie es einem Herstellungsverfahren für eine Anschlussvorrichtung gemäß einer Ausführungsform zugrunde liegt.

### Beschreibung von Ausführungsformen

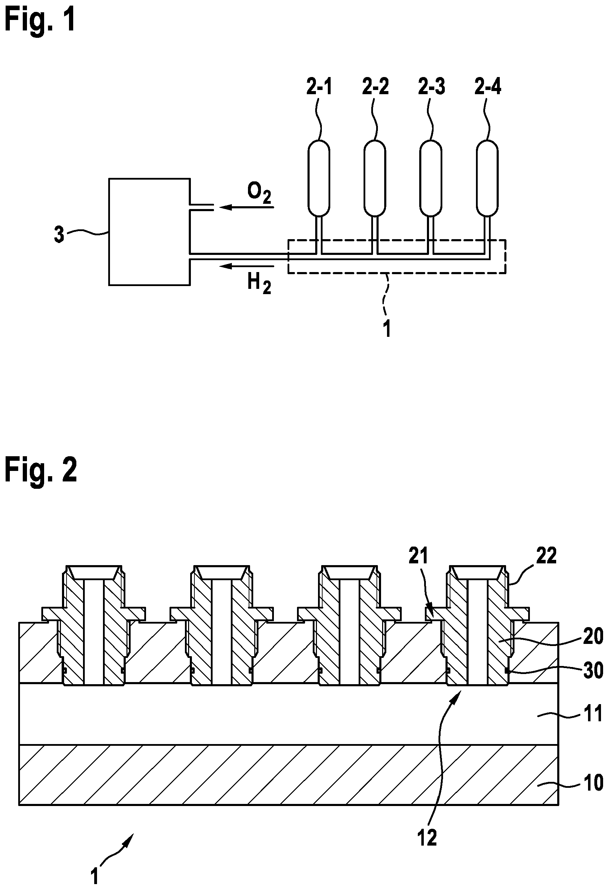

Figur 1 zeigt eine schematische Darstellung eines prinzipiellen Aufbaus eines Brennstoffzellensystems gemäß einer Ausführungsform. Das hier dargestellte Brennstoffzellensystem umfasst beispielsweise eine Brennstoffzellenvorrichtung 3. In dieser Brennstoffzellenvorrichtung 3 kann Wasserstoff mit Sauerstoff, insbesondere Luft Sauerstoffdruck oxidiert werden. Dabei wird elektrische Energie bereitgestellt. Diese elektrische Energie kann in einem Kraftfahrzeug beispielsweise für einen elektrischen Antrieb genutzt werden.

Der für den Betrieb des Brennstoffzellensystems erforderliche Wasserstoff kann in einem Wasserstoffspeicher gespeichert und bereitgestellt werden. Insbesondere kann der Wasserstoff bei hohem Druck, beispielsweise bis zu 700 bar, gespeichert werden. Dieser Wasserstoffspeicher kann, wie in Figur 1 dargestellt, zum Beispiel aus einem oder mehreren Einzelreservoirs 2-i gebildet werden. Die in Figur 1 dargestellte Anzahl von vier Einzelreservoirs 2-i dient dabei lediglich als Beispiel und stellt keine Einschränkung der vorliegenden Erfindung dar. Die Einzelreservoirs 2-i können über eine Anschlussvorrichtung 1 mit der Brennstoffzellenvorrichtung 3 verbunden werden. Dabei können insbesondere zwischen den einzelnen Reservoirs 2-i und der Anschlussvorrichtung 1 auch weitere Komponenten (hier nicht dargestellt) vorgesehen sein. Beispielsweise können diese weiteren Komponenten Ventile, Rückflussverhinderer oder weitere Mess-, Regel- oder Sicherheitskomponenten umfassen.

Die Einzelreservoirs 2-i sind dabei lösbar mit der Anschlussvorrichtung 1 verbunden. Hierzu kann beispielsweise eine Anschlussleitung der einzelnen Reservoirs 2-i mit einer korrespondierenden Komponente der Anschlussvorrichtung 1 verschraubt werden.

Figur 2 zeigt einen schematischen Querschnitt durch eine Anschlussvorrichtung 1 gemäß einer Ausführungsform. Wie hierbei zu erkennen ist, umfasst die Anschlussvorrichtung 1 dabei einen Grundkörper 10 sowie ein oder mehrere Anschlusselemente 20.

Der Grundkörper 10 weist dabei im Inneren einen Strömungskanal 11 auf. Dieser Strömungskanal, kann mit der Brennstoffzellenvorrichtung 3 verbunden werden, um an der Brennstoffzellenvorrichtung 3 den erforderlichen Wasserstoff bereitzustellen.

Weiterhin umfasst der Grundkörper 10 ein oder mehrere Anschlussöffnungen 12.diese Anschlussöffnungen 12 verlaufen zumindest annähernd radial zu dem Strömungskanal 11.

Der Grundkörper 10 kann aus einem Leichtmetall, wie zum Beispiel Aluminium oder einer Aluminium-Legierung hergestellt sein. Beispielsweise kann der Grundkörper 10 als Gussteil auf einfache Weise mit hoher Präzision hergestellt werden. Alternativ ist es auch möglich, den Grundkörper 2 aus einem massiven Materialblock durch Einbringen entsprechender Bohrungen und weitere Nachbearbeitung zu realisieren.

In den Grundkörper 10, insbesondere in die Anschlussöffnungen 12, sind jeweils Anschlusselemente 20 eingebracht. Diese Anschlusselemente 20 können aus einem hochfesten Material, wie beispielsweise Stahl, insbesondere Edelstahl, gebildet werden.

Die Anschlusselemente 20 können beispielsweise in die Anschlussöffnungen 12 eingeschraubt werden. Hierzu können sowohl die Anschlussöffnungen 12 als auch das Anschlusselement 20 ein entsprechendes Gewinde aufweisen. Bei diesem Gewinde kann es sich zum Beispiel um ein lineares Gewinde handeln, welches sowohl an einem Bereich an der Außenseite des Grundkörper 10 als auch im Bereich des Strömungskanal 11 den gleichen Durchmesser aufweist. In diesem Fall kann zum Beispiel die Dichtigkeit mittels eines zusätzlichen Dichtelements 30, zum Beispiel einem O-Ring, gewährleistet werden.

Alternativ ist es auch möglich, dass die Gewinde des Anschlusselements 20 und/oder des Gewindes in der Anschlussöffnungen 12 einen konischen Verlauf aufweisen, wobei ein Durchmesser an der Außenseite des Grundkörpers 10 größer ist als in einem Bereich an der Strömungsöffnung 11.

Weiterhin kann die Dichtigkeit der Verbindung zwischen Grundkörper 10 und Anschlusselement 20 durch einen Dichtabschnitt 21 an dem Anschlusselement 20 verbessert werden. Insbesondere kann ein solcher Dichtabschnitt 21 an dem Anschlusselement 20 derart vorgesehen sein, dass der Dichtabschnitt 21 plan auf dem Grundkörper 10 aufliegt, wenn das Anschlusselement 20 in den Grundkörper 10 eingebracht ist.

Darüber hinaus kann an einer Außenseite des aus dem Grundkörper 10 herausragenden Teils des Anschlusselements 20 beispielsweise ein Gewinde 22 vorgesehen sein. Auf diese Weise können weitere Komponenten, beispielsweise korrespondierende Anschlusskomponenten der Einzelreservoirs 21-i bzw. Zuleitungen von den Einzelreservoirs 21-i mit dem Anschlusselement 20 verschraubt werden. Es versteht sich, dass die Anschlusselemente 20 darüber hinaus auch beliebige weitere Komponenten und Ausgestaltungen aufweisen können, um die Einzelreservoirs 21-i bzw. deren Zuleitungen mit den Anschlusselement 20 zu verbinden.

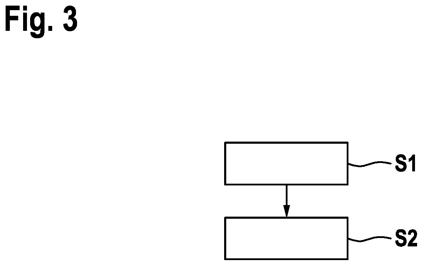

Figur 3 zeigt ein Ablaufdiagramm, wie es einem Herstellungsverfahren für eine Anschlussvorrichtung 1 gemäß einer Ausführungsform zugrunde liegt. Bei der zugrundeliegenden Anschlussvorrichtung 1 kann es sich um die zuvor beschriebene Anschlussvorrichtung 1 handeln. Entsprechend kann das nachfolgend beschriebene Verfahren beliebige Schritte umfassen, wie sie zur Herstellung der zuvor beschriebenen Anschlussvorrichtung 1 erforderlich sind.

In Schritt S1 wird zunächst ein Grundkörper 10 bereitgestellt. Bei diesem Grundkörper 1 kann es sich insbesondere um den zuvor beschriebenen Grundkörper 1 aus einem Leichtmetall, insbesondere Aluminium oder einer Aluminium-Legierung handeln. Dieser Grundkörper weist dabei einen Strömungskanal 11 und mindestens eine radial zu dem Strömungskanal 11 verlaufende Anschlussöffnungen 12 auf.

In Schritt S2 werden daraufhin in die Anschlussöffnungen 12 des Grundkörpers 1 jeweils ein Anschlusselement 20 eingebracht. Diese Anschlusselemente 20 können aus einem hochfesten Material wie beispielsweise Stahl, insbesondere Edelstahl, hergestellt sein. Das Einbringen kann beispielsweise durch Einschrauben der Anschlusselemente 20 in die Anschlussöffnungen 12 erfolgen.

Zusammenfassend betrifft die vorliegende Erfindung eine Anschlussvorrichtung zum Verbinden eines oder mehrerer Wasserstoff-Speicher mit einer Brennstoffzelle. Hierzu wird eine Anschlussvorrichtung vorgeschlagen, welche einen Grundkörper aus einem Leichtmetall wie beispielsweise Aluminium und Anschlusselemente aus einem hochfesten Material wie beispielsweise Edelstahl umfasst.

## Patentansprüche

1. Hochdruck-Wasserstoffspeicher, mit:
einer Anschlussvorrichtung (1) für einen Hochdruck-Wasserstoffreservoir (2-i), mit:
einem Grundkörper (10) aus Aluminium oder einer Aluminium-Legierung mit einem Strömungskanal (11) und mindestens einer radial zu dem Strömungskanal (11) verlaufenden Anschlussöffnung (12); und
mindestens einem Anschlusselement (20) aus Stahl,
wobei das mindestens eine Anschlusselement (20) in der Anschlussöffnung (11) des Grundkörpers (10) angeordnet ist;
; und
mindestens ein Hochdruck-Wasserstoffreservoir (2-i), das jeweils an einem Anschlusselement (20) lösbar mit der Anschlussvorrichtung (1) verbunden ist.

2. Hochdruck-Wasserstoffspeicher, mit:
einer Anschlussvorrichtung (1) für einen Hochdruck-Wasserstoffreservoir (2-i), nach Anspruch 1, wobei der Grundkörper (10) ein Aluminium-Gussteil umfasst.

3. Hochdruck-Wasserstoffspeicher, mit:
einer Anschlussvorrichtung (1) für einen Hochdruck-Wasserstoffreservoir (2-i) nach Anspruch 1 oder 2, wobei die mindestens eine Anschlussöffnung (12) ein Gewinde ausweist, und
wobei das mindestens eine Anschlusselement (20) in die Anschlussöffnung (12) eingeschraubt ist.

4. Hochdruck-Wasserstoffspeicher, mit:
einer Anschlussvorrichtung (1) für einen Hochdruck-Wasserstoffreservoir (2-i) nach Anspruch 3, wobei das mindestens eine Anschlusselement (20) einen Dichtabschnitt (21) umfasst, der im eingeschraubten Zustand des Anschlusselements (20) an einer Außenseite des Grundkörpers (10) aufliegt.

5. Hochdruck-Wasserstoffspeicher, mit:
einer Anschlussvorrichtung (1) für einen Hochdruck-Wasserstoffreservoir (2-i) nach Anspruch 3 oder 4 wobei das Gewinde einen konischen Verlauf aufweist, und wobei ein Durchmesser des Gewindes im Bereich der Au-ßenseits des Grundkörper (10) größer ist, als ein Durchmesser des Gewindes im Bereich des Strömungskanals (11).

6. Hochdruck-Wasserstoffspeicher, mit:
einer Anschlussvorrichtung (1) für einen Hochdruck-Wasserstoffreservoir (2-i) nach einem der vorstehenden Ansprüche 1 bis 5, wobei das mindestens eine Anschlusselement (20) an einem von dem Grundkörper (10) wegweisenden Abschnitt dazu ausgelegt ist, mit einem Hochdruck-Wasserstoffreservoir (2-i) verbunden zu werden.

7. Brennstoffzellensystem, mit:
einem Hochdruck-Wasserstoffspeicher nach einem der Ansprüche 1 bis 6; und
einer Brennstoffzellenvorrichtung, die mit dem Hochdruck-Wasserstoff-speicher verbunden ist.

8. Herstellungsverfahren für eine Anschlussvorrichtung (1) eines Hochdruck-Wasserstoffspeichers nach Anspruch1 für ein Hochdruck-Wasserstoffreservoir, mit den Schritten:
Bereitstellen (S1) eines Grundkörpers (10) aus Aluminium oder einer Aluminium-Legierung mit einem Strömungskanal (11) und mindestens einer radial zu dem Strömungskanal (11) verlaufenden Anschlussöffnung (12); und
Einbringen (S2) von mindestens einem Anschlusselement (20) aus Stahl in die mindestens Anschlussöffnung (12) des Grundkörpers (1).

## Claims

1. High-pressure hydrogen store, having:
a connection device (1) for a high-pressure hydrogen reservoir (2-i), having:
a main body (10) made of aluminium or an aluminium alloy with a flow channel (11) and at least one connection opening (12) running radially with respect to the flow channel (11); and
at least one connection element (20) made of steel,
wherein the at least one connection element (20) is arranged in the connection opening (11) of the main body (10);
and
at least one high-pressure hydrogen reservoir (2-i), which is in each case detachably connected to the connection device (1) at a connection element (20).

2. High-pressure hydrogen store, having:
a connection device (1) for a high-pressure hydrogen reservoir (2-i), according to Claim 1, wherein the main body (10) comprises an aluminium cast part.

3. High-pressure hydrogen store, having:
a connection device (1) for a high-pressure hydrogen reservoir (2-i) according to Claim 1 or 2, wherein the at least one connection opening (12) has a
thread, and
wherein the at least one connection element (20) is screwed into the connection opening (12).

4. High-pressure hydrogen store, having:
a connection device (1) for a high-pressure hydrogen reservoir (2-i) according to Claim 3, wherein the at least one connection element (20) comprises a sealing section (21), which rests on an outer side of the main body (10) in the screwed-in state of the connection element (20).

5. High-pressure hydrogen store, having:
a connection device (1) for a high-pressure hydrogen reservoir (2-i) according to Claim 3 or 4, wherein the thread has a conical profile, and wherein a diameter of the thread in the region of the outer side of the main body (10) is greater than a diameter of the thread in the region of the flow channel (11).

6. High-pressure hydrogen store, having:
a connection device (1) for a high-pressure hydrogen reservoir (2-i) according to any one of the preceding Claims 1 to 5, wherein the at least one connection element (20), by way of a section facing away from the main body (10), is designed to be connected to a high-pressure hydrogen reservoir (2-i).

7. Fuel cell system, having:
a high-pressure hydrogen store according to any one of Claims 1 to 6; and
a fuel cell device which is connected to the high-pressure hydrogen store.

8. Method for producing a connection device (1) of a high-pressure hydrogen store according to Claim 1 for a high-pressure hydrogen reservoir, comprising the steps of:
providing (S1) a main body (10) made of aluminium or an aluminium alloy with a flow channel (11) and at least one connection opening (12) running radially with respect to the flow channel (11); and
introducing (S2) at least one connection element (20) made of steel into the at least connection opening (12) of the main body (1).

## Revendications

1. Stockage d'hydrogène à haute pression, avec :
un dispositif de raccordement (1) pour un réservoir d'hydrogène à haute pression (2-i), avec :
un corps de base (10) en aluminium ou en un alliage d'aluminium avec un canal d'écoulement (11) et au moins une ouverture de raccordement (12) s'étendant radialement par rapport au canal d'écoulement (11) ; et
au moins un élément de raccordement (20) en acier,
l'au moins un élément de raccordement (20) étant agencé dans l'ouverture de raccordement (11) du corps de base (10) ;
et
au moins un réservoir d'hydrogène à haute pression (2-i), qui est respectivement relié de manière amovible au dispositif de raccordement (1) au niveau d'un élément de raccordement (20).

2. Stockage d'hydrogène à haute pression, avec :
un dispositif de raccordement (1) pour un réservoir d'hydrogène à haute pression (2-i), selon la revendication 1, le corps de base (10) comprenant une pièce moulée en aluminium.

3. Stockage d'hydrogène à haute pression, avec :
un dispositif de raccordement (1) pour un réservoir d'hydrogène à haute pression (2-i) selon la revendication 1 ou 2, l'au moins une ouverture de raccordement (12) présente un filetage, et
l'au moins un élément de raccordement (20) étant vissé dans l'ouverture de raccordement (12).

4. Stockage d'hydrogène à haute pression, avec :
d'un dispositif de raccordement (1) pour un réservoir d'hydrogène à haute pression (2-i) selon la revendication 3, l'au moins un élément de raccordement (20) comprenant une section d'étanchéité (21) qui, à l'état vissé de l'élément de raccordement (20), repose sur un côté extérieur du corps de base (10).

5. Stockage d'hydrogène à haute pression, avec :
un dispositif de raccordement (1) pour un réservoir d'hydrogène à haute pression (2-i) selon la revendication 3 ou 4, le filetage présentant un tracé conique, et un diamètre du filetage dans la zone des côtés extérieurs du corps de base (10) étant supérieur à un diamètre du filetage dans la zone du canal d'écoulement (11).

6. Stockage d'hydrogène à haute pression, avec :
un dispositif de raccordement (1) pour un réservoir d'hydrogène à haute pression (2-i) selon l'une quelconque des revendications 1 à 5 précédentes, l'au moins un élément de raccordement (20) étant conçu, au niveau d'une section s'éloignant du corps de base (10), pour être relié à un réservoir d'hydrogène à haute pression (2-i).

7. Système de piles à combustible, avec :
un stockage d'hydrogène à haute pression selon l'une quelconque des revendications 1 à 6 ; et
un dispositif de pile à combustible, qui est relié au stockage d'hydrogène à haute pression.

8. Procédé de fabrication d'un dispositif de raccordement (1) d'un stockage d'hydrogène à haute pression selon la revendication 1 pour un réservoir d'hydrogène à haute pression, avec les étapes suivantes :
la fourniture (S1) d'un corps de base (10) en aluminium ou en un alliage d'aluminium avec un canal d'écoulement (11) et au moins une ouverture de raccordement (12) s'étendant radialement par rapport au canal d'écoulement (11) ; et
l'introduction (S2) d'au moins un élément de raccordement (20) en acier dans l'au moins une ouverture de raccordement (12) du corps de base (1).
